# EUROPÄISCHE PATENTSCHRIFT

(11) **EP 3 499 083 B1**
(45) Veröffentlichungstag und Bekanntmachung des Hinweises auf die Patenterteilung: **08.06.2022**
(21) Anmeldenummer: 18211811.7
(22) Anmeldetag: 12.12.2018
(51) Int. Cl.: F16F 9/38, F16F 1/02, F16F 1/12

(54) **FEDERHÜLSE, ZYLINDER, KOLBENZYLINDEREINHEIT UND VERFAHREN ZUR HERSTELLUNG EINER KOLBENZYLINDEREINHEIT**
SPRING SLEEVE, CYLINDER, PISTON CYLINDER UNIT AND METHOD FOR PRODUCING A PISTON CYLINDER UNIT
DOUILLE À RESSORT, CYLINDRE, UNITÉ PISTON-CYLINDRE ET PROCÉDÉ DE FABRICATION D'UNE UNITÉ PISTON-CYLINDRE

(30) Priorität: 12.12.2017 DE 102017129539
(43) Veröffentlichungstag der Anmeldung: 19.06.2019
(73) Patentinhaber: Stabilus GmbH, 56070 Koblenz (DE)
(72) Erfinder: Schneider, Michael, 56299 Ochtendung (DE)
(74) Vertreter: Macliing, Trixia

(56) Entgegenhaltungen:
- EP-A1- 2 037 068
- GB-A- 2 519 252
- US-A- 4 572 022
- US-A1- 2003 100 378

## Beschreibung

Die Erfindung betrifft eine Federhülse für eine Kolbenzylindereinheit, wobei die Federhülse eingerichtet ist eine Feder zumindest teilweise aufzunehmen und entlang eines Hubwegs der Kolbenzylindereinheit zu führen, wobei die Federhülse vorzugsweise eine zylindrische Hülseninnenoberfläche aufweist. Die Erfindung betrifft weiterhin einen Zylinder für eine Kolbenzylindereinheit, wobei der Zylinder eingerichtet ist innerhalb einer Feder einer Kolbenzylindereinheit angeordnet zu werden. Die Erfindung betrifft auch eine Kolbenzylindereinheit, umfassend einen Zylinder, eine konzentrisch um den Zylinder angeordnete Feder, je eine konzentrisch um die Feder angeordnete Innenfederhülse und Außenfederhülse, wobei der Zylinder und die Feder innerhalb der Innenfederhülse und der Außenfederhülse angeordnet sind. Die Erfindung betrifft schließlich ein Verfahren zur Herstellung einer solchen Kolbenzylindereinheit.

Aus dem Stand der Technik ist beispielsweise aus DE 10 2005 007 741 A1 eine Kolbenzylindereinheit der oben genannten Art bekannt. Die Kolbenzylindereinheit umfasst einen zentralen Zylinder um den zwei Federhülsen angeordnet sind. Eine Schraubenfeder wird zwischen den zwei teilweise ineinandergreifenden Federhülsen und dem Zylinder gelagert und geführt. Wenn die Kolbenzylindereinheit eine Hubbewegung ausführt, wird dadurch die Feder der Kolbenzylindereinheit entlang des Hubwegs komprimiert oder dekomprimiert.

Bei derartigen Kolbenzylindereinheiten vergrößert sich der Durchmesser der Schraubenfedern bei einem Komprimieren der Schraubenfeder und verringert sich bei einem Dekomprimieren der Schraubenfeder. Die Führung mit muss also eine gewisse Toleranz aufweisen, um ein Verklemmen der Schraubenfeder und einen daraus resultierenden Ausfall der Kolbenzylindereinheit zu vermeiden. Gleichzeitig erhöht eine größere Toleranz aber auch die Gefahr eines "Ausknickens" und inelastischen Verformens der Schraubenfeder, wodurch unerwünschte Geräusche und/oder eine Beschädigung des Zylinders oder der Federhülsen verursacht werden können.

Die in DE 10 2005 007 741 A1 beschriebene Kolbenzylindereinheit umfasst, um diese Probleme zu lösen, eine Schraubenfeder, die zumindest an ihrer radial zur Zylinderwand gerichteten Oberfläche eine elastische Außenschicht aufweist. Dadurch wird die Schraubenfeder stabilisiert und eine Gefahr einer Beschädigung der Reibpartner (Zylinder und Federhülsen) vermindert.

Allerdings hat die oben genannte Lösung, den Nachteil, dass Sie regelmäßig die Reibung und den Abrieb zwischen der Feder und den Reibpartnern erhöht. Hinzu kommt, dass die beschichtete Feder schwierig herzustellen ist, und damit die Kosten der Kolbenzylindereinheit deutlich erhöht.

Ein weiteres Problem der bekannten Kolbenzylindereinheiten ist es, dass bei der Verwendung eines Schmiermittels zwischen Feder und Reibpartnern zur Verringerung des Abriebs, der Geräuschentwicklung und der Gefahr eines Verklemmens, es zu einer Verschiebung oder Ansammlung des Schmiermittels durch eine Hubbewegung kommen kann, wodurch die Schmierwirkung des Schmiermittels begrenzt ist.

Die Druckschrift EP2037068A1 beschreibt einen Spindelantrieb für eine Kraftfahrzeugtür mit einem Führungsrohr und einer konzentrisch um das Führungsrohr angeordneten Feder. Das Führungsrohr weist an seiner Außenseite eine Anzahl von reibungsvermindernden Abstandsmitteln auf, die einen direkten Kontakt der Feder mit dem Führungsrohr verhindern. Nachteilig daran ist, dass ein Schmiermittel zwischen den Abstandsmitteln leicht ablaufen und sich an einem unteren Ende des Spindelantriebs sammeln kann, sodass es nicht für eine optimale Schmierung über die gesamte Länge des Spindelantriebs zur Verfügung steht.

Aufgabe der Erfindung ist es daher, eine kostengünstige Kolbenzylindereinheit sowie ein Herstellungsverfahren zur Herstellung einer solchen Kolbenzylindereinheit bereitzustellen, die einen verminderten Verschleiß und ein verbessertes Bewegungsverhalten einer Kolbenzylindereinheit ermöglicht.

Eine Kolbenzylindereinheit im Sinne der Erfindung kann beispielsweise eine Gasdruckfeder oder ein pneumatischer und/oder hydraulischer Stoßdämpfer sein.

### Federhülse

Die Innenfederhülse und/oder Außenfederhülse der erfindungsgemäßen Kolbenzylindereinheit ist vorzugsweise eine Federhülse, die sich dadurch auszeichnet, dass die Federhülse an ihrer Hülseninnenoberfläche eine Anzahl von ein, zwei, drei, vier oder mehr Nuten aufweist.

Erfindungsgemäß wird unter einer "Nut" eine längliche Vertiefung in einer Oberfläche verstanden, die entlang einer Längsachse der Nut parallel zu der Oberfläche eine Nutlänge aufweist, die wesentlich größer, zum Beispiel zumindest doppelt, fünfmal, zehnmal oder hundertmal, so groß ist wie eine Nutbreite der Nut orthogonal zu der Längsachse und parallel zu der Oberfläche.

Die Verwendung von Nuten in der Hülseninnenoberfläche hat zunächst den Effekt, dass eine geringere Gesamtfläche der Federhülse als Reibpartner mit der zu führenden Feder bereitgesteht wird, wodurch Reibung und Schwingungsübertragung reduziert und eine mögliche Geräuschentwicklung verhindert werden. Gleichzeitig kann aber eine fast unverändert gute Führung der Feder erzielt werden.

Hinzu kommt, dass die Nuten als Reservoir für ein in der Kolbenzylindereinheit verwendetes Schmiermittel wirken. Die Nuten halten insbesondere aufgrund von Oberflächenspannungseffekten des Schmiermittels einen Teil des Schmiermittels, auch wenn sich der Rest des Schmiermittels durch die Schwerkraft am anderen Ende der Kolbenzylindereinheit sammelt. Dadurch wird die Schmierwirkung des Schmiermittels verbessert, sodass die Lebensdauer und Wartungsintervalle der Kolbenzylindereinheit verlängert werden. Dieser Effekt lässt sich durch eine Abstimmung der geometrischen Maße der Nuten auf das Schmiermittel optimieren.

Die Längsachse der Nuten ist bei Verwendung der Hülse in der Kolbenzylindereinheit in einer Axialrichtung parallel zu dem Hubweg ausgerichtet. Derartige Nuten werden erfindungsgemäß als "axiale Nuten" bezeichnet. Durch die Ausrichtung der Längsachse in Axialrichtung wird eine bessere Führung der Feder erzielt als beispielsweise bei einer Ausrichtung der Längsachse in einer Umfangsrichtung der Hülseninnenoberfläche.

Vorteilhafterweise entspricht die Nutlänge der Nuten bei Verwendung der Hülse in der Kolbenzylindereinheit zumindest der Hälfte der von der Feder bei einer Hubbewegung der Kolbenzylindereinheit überstrichenen Hülsenfederlänge der Federhülse, insbesondere der gesamten Hülsenfederlänge, oder ist größer als die Hülsenfederlänge. Durch eine solche Nutlänge wird sichergestellt, dass die Feder über die gesamte Hubbewegung optimal geführt und geschmiert wird. Wenn die Nutlänge größer als die Hülsenfederlänge ist, ergibt sich daraus der besondere Vorteil, dass zusätzliche Schmiermittelreservoirs außerhalb der Federlänge entstehen, aus denen bei Bedarf zusätzliches Schmiermittel an die Feder gelangen kann.

Die erfindungsgemäße Federhülse kann sowohl eine Innenfederhülse oder eine Außenfederhülse für eine Kolbenzylindereinheit sein.

Die axialen Nuten sind vorzugsweise in Umfangsrichtung um die Hülseninnenoberfläche gleichmäßig verteilt, also beispielsweise jeweils in einem Abstand von 360°/2, 360°/3, 360°/4, 360°/5 usw. zur nächsten benachbarten Nut. Zur besseren und gleichmäßigeren Druckverteilung in der Kolbenzylindereinheit und besseren Führung der Feder, vor allem pro Flächeneinheit bezogen, sind vorzugsweise mindestens drei radial gleichwinkelverteilte Nuten vorgesehen.

Die Nuten weisen bevorzugt abgerundete Kanten am Übergang zur restlichen Hülseninnenoberfläche in Umfangsrichtung auf. Dadurch lassen sich unnötige Reibungseffekte sowie Beschädigungen einer Federbeschichtung bei einem Drehen der Federwindungen gegen die Federhülse vermeiden.

Als Tiefe der Nut ist hier der radiale Abstand des tiefsten Punktes der Nut von einer gedachten idealen zylindrischen Hülseninnenoberfläche zu verstehen.

Erfindungsgemäß variiert die Tiefe der Nuten in Axialrichtung. Die Tiefe der Nuten kann beispielsweise periodisch schwanken entlang der Zylinderachse. Diese Ausführungsform hat den Vorteil, dass das Schmiermittel noch besser durch die Oberflächenspannung in den Nuten, insbesondere den tiefsten Bereichen, gehalten werden kann. Der "Reservoir"-Effekt ist also in dieser Ausführungsform je nach Geometrie deutlich effektiver. Andererseits ist diese Ausführungsform schwieriger herzustellen und insbesondere ein Spritzguss mit Nuten mit variierender Tiefe in einer Hülseninnenoberfläche in einem Stück kaum möglich, wodurch sich die Herstellungskosten erhöhen.

In einer weiteren Ausführungsform besteht die Federhülse aus einer Kunststoffmischung umfassend Kunststoffe wie Polyamid (PA) und insbesondere Zusätze von Polytetrafluorethylen (PTFE), wobei vorzugsweise der Anteil von Polytetrafluorethylen im Bereich von 10 % bis 30 %, insbesondere 15 % bis 25 %, insbesondere bei etwa 20 % liegt, oder von glasfaserverstärktem Polyamid.

Es hat sich herausgestellt, dass die genannten Materialien für die Federhülse ein besonders vorteilhaftes Verhalten als Reibpartner mit den üblichen Federmaterialien, wie zum Beispiel einem elastischen Stahl, aufweisen. Zusätze von Polytetrafluorethylen verringern die Reibung mit der Feder. Insbesondere haben Versuche ergeben, dass ein Anteil von etwa 20 % von Polytetrafluorethylen zu einer besonders geringen Reibung über die gesamte Produktlebensdauer führt. Zusätze von faserverstärktem Polyamid machen die Federhülse widerstandsfähiger und verringern den Abrieb durch die Feder. Die verstärkenden Fasern können vorteilhafterweise Glasfasern, Kohlefasern und/oder Kunststofffasern sein.

In einer weiteren Ausführungsform umfasst die Federhülse eine zylindrische Hülsenbasisschicht sowie eine Hülsenoberflächenschicht, wobei die Nuten in der Hülsenoberflächenschicht angeordnet sind, und wobei vorzugsweise die Hülsenbasisschicht und die Hülsenoberflächenschicht aus verschiedenen Materialien bestehen. Vorzugsweise ist dies eine tribologische Beschichtung zur Erhöhung der Oberflächenhärte oder der Friktionsreduzierung, was beides zur Verminderung des Verschleißes der gegeneinander bewegten Reibepartner beiträgt.

Diese Ausführungsform hat den Vorteil, dass die Hülsenbasisschicht aus einem besonders widerstandsfähigen und stabilen Material, beispielsweise aus faserverstärktem Polyamid oder einer diamantähnlichen Kohle- und/oder Stickstoffbasierten Beschichtung (C-, CN-), bestehen kann, während die Hülsenoberflächenschicht aus einen Material mit verringerter Reibung gegenüber der Feder, beispielsweise einer Kunststoffmischung umfassend Polyamid (PA), insbesondere mit Zusätzen von Polytetrafluorethylen, bestehen kann. Weiterhin lassen sich so auch leichter Nuten mit einer variierenden Tiefe verwirklichen. So kann die Hülsenoberflächenschicht beispielsweise durch ein additives Verfahren auf die Innenoberfläche der Hülsenbasisschicht aufgetragen werden und dabei können die Nuten mit variierender Tiefe in die entstehende Hülsenoberflächenschicht eingebracht werden.

### Zylinder

Der Zylinder der erfindungsgemäßen Kolbenzylindereinheit ist vorzugsweise ein Zylinder, der an seiner Zylinderaußenfläche mindestens eine Nut, insbesondere zwei, drei vier oder mehr Nuten, aufweist.

Die Verwendung von Nuten in der Zylinderaußenfläche hat auch hier zunächst den Effekt, dass eine geringere Gesamtfläche des Zylinders als Reibpartner mit der zu führenden Feder bereitgesteht wird, wodurch Reibung und Schwingungsübertragung reduziert und eine mögliche Geräuschentwicklung verhindert werden. Gleichzeitig kann aber eine fast unverändert gute Führung der Feder erzielt werden.

Hinzu kommt, dass die Nuten als Reservoir für ein in der Kolbenzylindereinheit verwendetes Schmiermittel wirken. Die Nuten halten insbesondere aufgrund von Oberflächenspannungseffekten des Schmiermittels einen Teil des Schmiermittels, auch wenn sich der Rest des Schmiermittels durch die Schwerkraft am anderen Ende der Kolbenzylindereinheit sammelt. Dadurch wird die Schmierwirkung des Schmiermittels verbessert, sodass die Lebensdauer und Wartungsintervalle der Kolbenzylindereinheit verlängert werden. Dieser Effekt lässt sich durch eine Abstimmung der geometrischen Maße der Nuten auf das Schmiermittel optimieren.

Die Längsachse der Nuten ist bei Verwendung des Zylinders in der Kolbenzylindereinheit in einer Axialrichtung parallel zu dem Hubweg ausgerichtet. Derartige Nuten werden erfindungsgemäß als "axiale Nuten" bezeichnet. Durch die Ausrichtung der Längsachse in Axialrichtung wird eine bessere Führung der Feder erzielt als beispielsweise bei einer Ausrichtung der Längsachse in einer Umfangsrichtung der Zylinderaußenfläche.

Vorteilhafterweise entspricht die Nutlänge der Nuten bei Verwendung des Zylinders in der Kolbenzylindereinheit zumindest der Hälfte der von der Feder bei einer Hubbewegung der Kolbenzylindereinheit überstrichenen Zylinderfederlänge des Zylinders, insbesondere der gesamten Zylinderfederlänge. Durch eine solche Nutlänge wird sichergestellt, dass die Feder über die gesamte Hubbewegung optimal geführt und geschmiert wird.

Die axialen Nuten sind vorzugsweise in Umfangsrichtung um die Zylinderaußenfläche gleichmäßig verteilt und somit druckbelastend, also beispielsweise jeweils in einem Abstand von 360°/2, 360°/3, 360°/4, 360°/ 5 usw. zur nächsten benachbarten Nut. Zur besseren und gleichmäßigeren Druckverteilung in der Kolbenzylindereinheit und besseren Führung der Feder, vor allem pro Flächeneinheit bezogen, sind vorzugsweise mindestens drei radial gleichwinkelverteilte Nuten vorgesehen.

Die Nuten weisen bevorzugt abgerundete Kanten am Übergang zur restlichen Zylinderaußenfläche in Umfangsrichtung auf. Dadurch lassen sich unnötige Reibungseffekte sowie Beschädigungen einer Federbeschichtung bei einem Drehen der Federwindungen gegen den Zylinder vermeiden.

Als Tiefe der Nut ist hier der radiale Abstand des tiefsten Punktes der Nut von einer gedachten idealen zylindrischen Zylinderaußenfläche zu verstehen.

Der "Zylinder" als Bauteil im Rahmen dieser Anmeldung ist üblicherweise nicht ideal zylinderförmig, sondern weist vorzugsweise mindestens eine zylinderförmige Außenfläche auf.

Erfindungsgemäß variiert die Tiefe der Nuten in Axialrichtung. Die Tiefe der Nuten kann beispielsweise periodisch schwanken entlang der Zylinderachse. Diese Ausführungsform hat den Vorteil, dass das Schmiermittel noch besser durch die Oberflächenspannung in den Nuten, insbesondere den tiefsten Bereichen, gehalten werden kann. Der "Reservoir"-Effekt ist also in dieser Ausführungsform je nach Geometrie deutlich effektiver. Andererseits ist diese Ausführungsform schwieriger herzustellen, insbesondere durch Spritzguss in einem Stück eines Zylinders mit Nuten mit variierender Tiefe an einer Zylinderaußenfläche, wodurch sich die Herstellungskosten erhöhen.

In noch einer Ausführungsform umfasst der Zylinder eine zylindrische Zylinderbasisschicht sowie eine Zylinderoberflächenschicht, wobei die Nuten in der Zylinderoberflächenschicht angeordnet sind, und wobei vorzugsweise die Zylinderbasisschicht und die Zylinderoberflächenschicht aus verschiedenen Materialien bestehen

Diese Ausführungsform hat den Vorteil, dass die Zylinderbasisschicht aus einem besonders widerstandsfähigen und stabilen Material, beispielsweise aus glasfaserverstärktem Polyamid, bestehen kann, während die Zylinderoberflächenschicht aus einen Material mit verringerter Reibung gegenüber der Feder, beispielsweise einer Kunststoffmischung umfassend Polyamid, insbesondere mit Zusätzen von Polytetrafluorethylen, bestehen kann. Weiterhin lassen sich so auch leichter Nuten mit einer variierenden Tiefe verwirklichen. So kann die Zylinderoberflächenschicht beispielsweise durch ein additives Verfahren auf die Außenoberfläche der Zylinderbasisschicht aufgetragen werden und dabei können die Nuten, vorzugsweise mit variierender Tiefe, in die entstehende Zylinderoberflächenschicht eingebracht werden.

### Kolbenzylindereinheit

Die erfindungsgemäße Aufgabe wird außerdem bei einer Kolbenzylindereinheit der eingangs genannten Art dadurch gelöst, dass die Innenfederhülse und / oder die Außenfederhülse und / oder der Zylinder an einer der Feder zugewandten Oberfläche mindestens eine Nut, insbesondere zwei, drei, vier oder mehr Nuten, aufweist.

Erfindungsgemäß können Nuten also in einem, zwei oder allen drei genannten Teilen der Kolbenzylindereinheit angeordnet sein. Vorzugsweise sind die Nuten zumindest an der Innenfederhülse angeordnet, da diese zur Führung der Feder den größten Beitrag leistet. Die Verwendung von Nuten hat auch hier zunächst den Effekt, dass eine geringere Gesamtfläche des jeweiligen Teiles als Reibpartner mit der zu führenden Feder bereitgesteht wird, wodurch Reibung und Schwingungsübertragung reduziert und eine mögliche Geräuschentwicklung verhindert werden. Gleichzeitig kann aber eine fast unverändert gute Führung der Feder erzielt werden.

Hinzu kommt, dass die Nuten als Reservoir für ein in der Kolbenzylindereinheit verwendetes Schmiermittel wirken. Die Nuten halten insbesondere aufgrund von Oberflächenspannungseffekten des Schmiermittels einen Teil des Schmiermittels auch wenn sich der Rest des Schmiermittels durch die Schwerkraft am anderen Ende der Kolbenzylindereinheit sammelt. Dadurch wird die Schmierwirkung des Schmiermittels verbessert, sodass die Lebensdauer und Wartungsintervalle der Kolbenzylindereinheit verlängert werden. Dieser Effekt lässt sich durch eine Abstimmung der geometrischen Maße der Nuten auf das Schmiermittel optimieren.

Vorzugsweise sind die Nuten an einer der Feder zugewandten Oberfläche zumindest der Innenfederhülse und des Zylinders angeordnet. Damit kann eine verminderte Reibung und gegebenenfalls eine gute Schmierung der Feder auch nach einer längeren Ruhephase der Kolbenzylindereinheit erreicht werden.

Die Längsachse der Nuten ist in einer Axialrichtung parallel zu dem Hubweg ausgerichtet. Derartige Nuten werden erfindungsgemäß als "axiale Nuten" bezeichnet. Durch die Ausrichtung der Längsachse in Axialrichtung wird eine bessere Führung der Feder erzielt als beispielsweise bei einer Ausrichtung der Längsachse in einer Umfangsrichtung der Hülseninnenoberfläche bzw. der Zylinderaußenoberfläche.

Vorteilhafterweise entspricht die Nutlänge der Nuten zumindest der Hälfte der von der Feder bei einer Hubbewegung der Kolbenzylindereinheit überstrichenen Hülsenfederlänge der Federhülse bzw. Zylinderfederlänge des Zylinders, insbesondere der gesamten Hülsenfederlänge bzw. Zylinderfederlänge, oder ist größer als die Hülsenfederlänge. Durch eine solche Nutlänge wird sichergestellt, dass die Feder über die gesamte Hubbewegung optimal geführt und geschmiert wird. Wenn die Nutlänge größer als die Hülsenfederlänge ist, ergibt sich daraus der besondere Vorteil, dass zusätzliche Schmiermittelreservoirs außerhalb der Federlänge entstehen, aus denen bei Bedarf zusätzliches Schmiermittel an die Feder gelangen kann.

Die axialen Nuten sind vorzugsweise in Umfangsrichtung um die Hülseninnenoberfläche(n) der Innenfederhülse und / oder der Außenfederhülse und / oder der Zylinderaußenfläche des Zylinders gleichmäßig verteilt, also beispielsweise jeweils in einem Abstand von 360°/2, 360°/3, 360°/4, 360°/ 5 usw. zur nächsten benachbarten Nut. Zur besseren und gleichmäßigeren Druckverteilung in der Kolbenzylindereinheit und besseren Führung der Feder, vor allem pro Flächeneinheit bezogen, sind vorzugsweise mindestens drei radial gleichwinkelverteilte Nuten vorgesehen.

Die Nuten weisen bevorzugt abgerundete Kanten am Übergang zur restlichen Hülseninnenoberfläche in Umfangsrichtung auf. Dadurch lassen sich unnötige Reibungseffekte sowie Beschädigungen einer Federbeschichtung bei einem Drehen der Federwindungen gegen die Federhülse(n) und oder den Zylinder vermeiden.

Als Tiefe der Nut ist hier der radiale Abstand des tiefsten Punktes der Nut von einer gedachten idealen zylindrischen Hülseninnenoberfläche oder einer gedachten idealen zylindrischen Außenfläche des Zylinders zu verstehen.

Erfindungsgemäß variiert die Tiefe der Nuten in Axialrichtung. Die Tiefe der Nuten kann beispielsweise periodisch schwanken entlang der Zylinderachse. Diese Ausführungsform hat den Vorteil, dass das Schmiermittel noch besser durch die Oberflächenspannung in den Nuten, insbesondere den tiefsten Bereichen, gehalten werden kann. Der "Reservoir"-Effekt ist also in dieser Ausführungsform je nach Geometrie deutlich effektiver. Andererseits ist diese Ausführungsform schwieriger herzustellen und insbesondere ein Spritzguss in einem Stück kaum möglich, wodurch sich die Herstellungskosten erhöhen.

Diese Ausführungsform ermöglicht, den Vorteil der Nuten nicht nur bezüglich der geringeren Reibfläche zwischen Feder und Federhülse(n) und / oder Zylinder zu nutzen, sondern auch die Nuten als Reservoir für das Schmiermittel zu nutzen. Es ergibt sich also ein besonderer synergetischer Vorteil bei der Verwendung eines Schmiermittels in den Nuten der erfindungsgemäßen Kolbenzylindereinheit.

In einer Ausführungsform ist die Feder nicht beflockt. Im Stand der Technik werden in Kolbenzylindereinheiten die Federn zumindest über einen Reibabschnitt beflockt, um die Geräuschentwicklung zu minimieren und trotzdem eine stabile Lagerung der Feder zu erreichen. Allerdings würde eine beflockte Feder den Effekt der Nuten in der vorliegenden Erfindung zum Teil verringern oder aufheben, da die beflockten Fasern auch in den Nuten mit dem Reibpartner (Federhülse(n) und / oder Zylinder) reiben würden und zum anderen ein, gegebenenfalls verwendetes, Schmiermittel aus den "Reservoirs" in den Nuten entfernen würde.

In einer besonderen Ausführungsform ist mindestens eine Oberfläche der Innenfederhülse und / oder der Außenfederhülse und / oder des Zylinders gegenüber dem Material der Feder reiboptimiert, vorzugsweise durch die Materialwahl einer Zylinderoberflächenschicht des Zylinders und / oder einer Hülsenoberflächenschicht der Innenfederhülse und / oder der Außenfederhülse.

Beispielsweise hat sich herausgestellt, da eine Hülsenoberflächenschicht und / oder eine Zylinderoberflächenschicht aus einer Kunststoffmischung umfassend Polyamid und Zusätze von Polytetrafluorethylen, wobei vorzugsweise der Anteil von Polytetrafluorethylen in einem Bereich von 10 % bis 30 %, insbesondere von 15 % bis 25 %, liegt, insbesondere etwa 20 % beträgt, ein vorteilhaftes Reibverhalten gegenüber einer Feder aus z.B. Federstahl aufweist.

### Herstellungsverfahren für eine Kolbenzylindereinheit

Die erfindungsgemäße Aufgabe wird außerdem gelöst durch ein Verfahren zur Herstellung einer Kolbenzylindereinheit, umfassend:
- einen Zylinder,
- eine konzentrisch um den Zylinder angeordnete Feder,
- je eine konzentrisch um die Feder angeordnete Innenfederhülse und Außenfederhülse,

wobei das Verfahren gekennzeichnet ist durch die Schritte:
   Einbringen von Nuten in:
   - die Innenfederhülse und / oder
   - die Außenfederhülse und / oder
   - den Zylinder
an einer der Feder zugewandten Oberfläche, vorzugsweise durch Spritzguss, ein additives Verfahren oder ein subtraktives Verfahren.

Mit dem erfindungsgemäßen Herstellungsverfahren lässt sich eine erfindungsgemäße Kolbenzylindereinheit mit den oben beschriebenen Vorteilen erhalten. Die Nuten können also in einem, zwei oder allen drei genannten Teilen der Kolbenzylindereinheit eingebracht werden. Vorzugsweise werden die Nuten zumindest in die Innenfederhülse eingebracht, da diese zur Führung der Feder den größten Beitrag leistet. Die Verwendung von Nuten hat auch hier zunächst den Effekt, dass eine geringere Gesamtfläche des genannten Teils als Reibpartner mit der zu führenden Feder bereitgesteht wird, wodurch Reibung und Schwingungsübertragung reduziert und eine mögliche Geräuschentwicklung verhindert werden. Gleichzeitig kann aber eine fast unverändert gute Führung der Feder erzielt werden.

Die Längsachse der Nuten ist nach Montage der Kolbenzylindereinheit in einer Axialrichtung parallel zu dem Hubweg ausgerichtet. Derartige Nuten werden erfindungsgemäß als "axiale Nuten" bezeichnet. Durch die Ausrichtung der Längsachse in Axialrichtung wird eine bessere Führung der Feder erzielt als beispielsweise bei einer Ausrichtung der Längsachse in einer Umfangsrichtung der Hülseninnenoberfläche bzw. der Zylinderaußenoberfläche.

Vorteilhafterweise entspricht die Nutlänge der Nuten zumindest der Hälfte der von der Feder bei einer Hubbewegung der Kolbenzylindereinheit überstrichenen Hülsenfederlänge der Federhülse bzw. Zylinderfederlänge des Zylinders, insbesondere der gesamten Hülsenfederlänge bzw. Zylinderfederlänge, oder ist größer als die Hülsenfederlänge. Durch eine solche Nutlänge wird sichergestellt, dass die Feder über die gesamte Hubbewegung optimal geführt und geschmiert wird. Wenn die Nutlänge größer als die Hülsenfederlänge ist, ergibt sich daraus der besondere Vorteil, dass zusätzliche Schmiermittelreservoirs außerhalb der Federlänge entstehen, aus denen bei Bedarf zusätzliches Schmiermittel an die Feder gelangen kann.

Die Nuten werden mit einer in Axialrichtung variierenden Tiefe eingebracht. Diese Ausführungsform liefert, wie schon zuvor beschrieben, einen verbesserten Reservoir-Effekt bezüglich eines eventuell in den Nuten einzubringenden Schmiermittels. Allerdings ist es schwierig, solche Nuten in die Innenoberfläche der Federhülse(n) einzubringen.

In einer weiteren Ausführungsform umfasst das Verfahren den Schritt des Erzeugens der Innenfederhülse und oder / der Außenfederhülse durch Beschichten einer zylindrischen Hülsenbasisschicht mit einer Hülsenoberflächenschicht, wobei die Nuten in die Hülsenoberflächenschicht eingebracht werden. In dieser Ausführungsform ist es einfacher, die Nuten mit einer variierenden Tiefe in Axialrichtung einzubringen. Weiterhin kann das Material der Hülsenbasisschicht(en) möglichst stabil gewählt werden während das Material der Hülsenoberflächenschicht(en) bezüglich der Reibung mit der Feder optimiert werden können, d.h. eine tribologische Beschichtung kann verwendet werden.

In einer Ausführungsform umfasst das Verfahren den Schritt des Erzeugens des Zylinders durch Beschichten einer zylindrischen Zylinderbasisschicht mit einer Zylinderoberflächenschicht, wobei die Nuten in die Zylinderoberflächenschicht eingebracht werden. In dieser Ausführungsform ist es einfacher, die Nuten mit einer variierenden Tiefe in Axialrichtung einzubringen. Weiterhin kann das Material der Zylinderbasisschicht(en) möglichst stabil gewählt werden während das Material der Zylinderoberflächenschicht(en) bezüglich der Reibung mit der Feder optimiert werden kann, d.h. eine tribologische Beschichtung kann verwendet werden.

Weitere Vorteile, Ziele und Eigenschaften vorliegender Erfindung werden anhand nachfolgender Beschreibung und anliegender Zeichnungen erläutert, in welchen beispielhaft erfindungsgemäße Vorrichtungen dargestellt sind. Bauteile der Vorrichtung, welche in den Figuren wenigstens im Wesentlichen hinsichtlich ihrer Funktion übereinstimmen, können hierbei mit gleichen Bezugsziffern gekennzeichnet sein, wobei diese Bauteile nicht in allen Figuren beziffert und erläutert sein müssen.

**Es zeigen:**
Fig. 1 eine schematische Schnittansicht einer erfindungsgemäßen Kolbenzylindereinheit, mit einer Federhülse und einem Zylinder;
Fig. 2 eine Schnittansicht entlang der Ebene A-A von Fig.1 einer erfindungsgemäßen Kolbenzylindereinheit;
Fig. 3 eine schematische Schnittansicht des Abschnitts B1, B2 oder B3 aus Fig. 1 in einer ersten Ausführungsform;
Fig. 4 eine schematische Schnittansicht des Abschnitts B1, B2 oder B3 aus Fig. 1 in einer zweiten Ausführungsform.

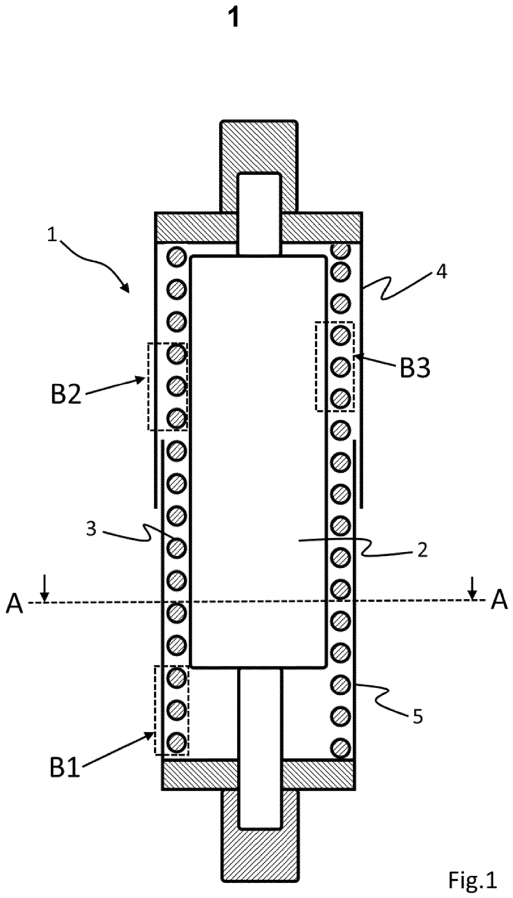

**Figur 1** zeigt eine schematische Schnittansicht einer erfindungsgemäßen Kolbenzylindereinheit 1, umfassend einen Zylinder 2, eine Feder 3, eine Außenfederhülse 4 und eine Innenfederhülse 5. Um den zentral angeordneten Zylinder 2 sind die zwei Federhülsen 4, 5 konzentrisch angeordnet. Die Feder 3 wird zwischen den zwei teilweise ineinandergreifenden Federhülsen 4, 5 und dem Zylinder 2 gelagert und geführt. Die Außenfederhülse 4 hat einen größeren Innendurchmesser als der Außendurchmesser der Innenfederhülse 5, wodurch die Innenfederhülse 5 bei einer Belastung der Kolbenzylindereinheit 1 weiter in die Außenfederhülse 4 eindringen kann.

Im Inneren des Zylinders 2 kann beispielsweise eine Gasdruckfeder angeordnet sein oder der Zylinder 2 kann Teil einer Gasdruckfeder sein. Der Zylinder 2 kann auch aus mehreren Zylindersegmenten bestehen, die teilweise ineinander eindringen können, um den Zylinder 2 zu verkürzen oder zu verlängern. Der Zylinder 2 ist also hier nur der Einfachheit halber als einstückig dargestellt.

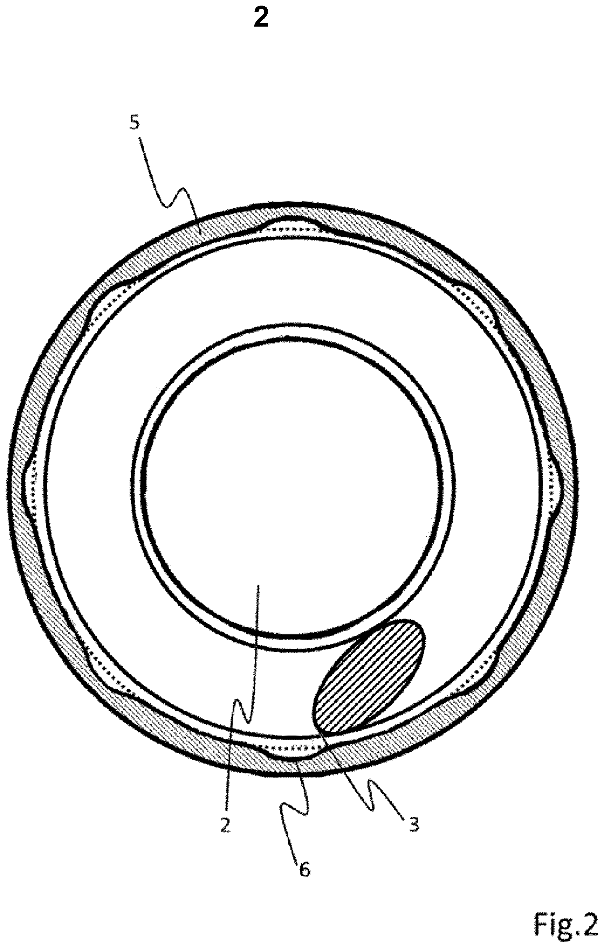

**Figur 2** zeigt eine Schnittansicht entlang der Schnittebene A-A der Figur 1. Hier wird nur exemplarisch eine Ausführungsform der Erfindung gezeigt, die nur axiale Nuten 6 in der Innenfederhülse 5 aufweist.

Die axialen Nuten in der Hülseninnenoberfläche verringern die Gesamtfläche der Federhülse, die als Reibpartner mit der zu führenden Feder 3 bereitgesteht wird. Die Feder 3 wird hier durch einen Kreisring mit schraffierter Schnittfläche repräsentiert, um die Verringerung der Reibfläche mit der Innenfederhülse 5 zu verdeutlichen. Die gepunkteten Linien repräsentieren den Verlauf einer alternativen Innenfederhülse 5 ohne axiale Nuten 6.

Die axialen Nuten 6 dienen außerdem als Reservoir für ein in der Kolbenzylindereinheit 1 verwendetes Schmiermittel. Die Nuten 6 halten aufgrund von Oberflächenspannungseffekten des Schmiermittels einen Teil des Schmiermittels, auch wenn sich der Rest des Schmiermittels durch die Schwerkraft am anderen Ende der Kolbenzylindereinheit 1 sammelt. Dieser Effekt lässt sich durch eine Abstimmung der geometrischen Maße der Nuten auf das Schmiermittel optimieren.

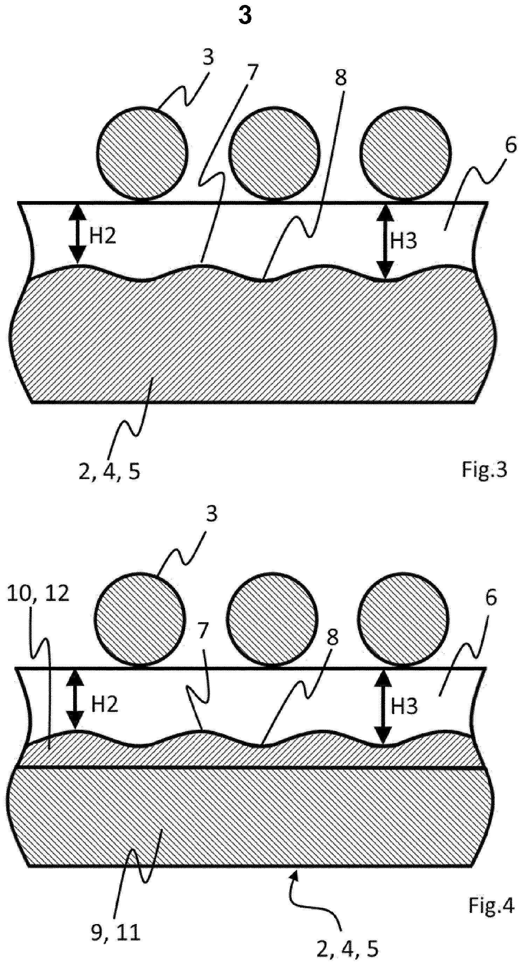

**Figuren 3 - 4** zeigen vereinfachte schematische Schnittansichten der Ebenenbereiche B1, B2 und B3 der Figur 1. Die dargestellten Strukturen können also dem Kontaktbereich zwischen der Feder 3 und der Innenfederhülse 5 (B1) oder der Feder 3 und der Außenfederhülse 4 (B2) oder der Feder 3 und dem Zylinder 2 (B3) entsprechen.

**Figur 3** zeigt eine schematische Schnittansicht eines Kontaktbereiches zwischen der Feder 3 und der Oberfläche einer der Federhülsen 4, 5 oder des Zylinders 2 im Bereich einer axialen Nut 6. Wie erkennbar ist, ist die Feder 3 außerhalb des Nutbereichs im Kontakt mit dem Reibpartner während sie im gezeigten Bereich nicht in direkten Kontakt ist. Die Gesamtfläche der Federhülse 4, 5 oder des Zylinder 2, die als Reibpartner mit der Feder 3 zur Verfügung steht ist also verringert. In den axialen Nuten 6 kann weiterhin ein Schmiermittel eingebracht sein. Die Nuten wirken dann als Reservoir für das Schmiermittel und verhindern, dass sich das Schmiermittel bei langer Ruhe der Kolbenzylindereinheit komplett an einem Ende der Kolbenzylindereinheit 1 sammelt. Die axiale Nut 6 hat in dieser Ausführungsform eine entlang der Axialrichtung (in den Figuren 3-4 jeweils in Horizontalrichtung) variierende Tiefe. Die Tiefe der Nut 6 schwankt zwischen einer kleinsten Tiefe H2 an einem Nut-Maximum 7 und einer größten Tiefe H3 an einem Nut-Minimum 8.

Die axiale Nut 6 hat in dieser Ausführungsform eine periodisch schwankende Tiefe, beispielsweise mit einem sinusförmigen Profil.

**Figur 4** zeigt noch eine weitere schematische Schnittansicht eines Kontaktbereiches zwischen der Feder 3 und der Oberfläche einer der Federhülsen 4, 5 oder des Zylinders 2 im Bereich einer axialen Nut 6. Wie in Figur 3 hat die axiale Nut 6 in dieser Ausführungsform eine in Axialrichtung variierende Tiefe. Die Tiefe der Nut 6 schwankt zwischen einer kleinsten Tiefe H2 an einem Nut-Maximum 7 und einer größten Tiefe H3 an einem Nut-Minimum 8.

Die Federhülse(n) 4, 5 und / oder der Zylinder 2 weisen jedoch in dieser Ausführungsform mindestens zwei Schichten auf.

Die Außenfederhülse 4 und / oder die Innenfederhülse 5 weist eine Hülsenbasisschicht 9 und eine Hülsenoberflächenschicht 10 auf und / oder der Zylinder weist eine Zylinderbasisschicht 11 und eine Zylinderoberflächenschicht 12 auf.

Die axiale Nut 6 ist vollständig in der Hülsenoberflächenschicht 10 oder der Zylinderoberflächenschicht 12 angeordnet. Die axiale Nut 6 kann beispielsweise bei einem Aufbringen der Hülsenoberflächenschicht 10 oder der Zylinderoberflächenschicht 12 auf die jeweilige Basisschicht 9, 11 eingebracht werden.

Die jeweilige Basisschicht 9, 11 kann aus einem mechanisch besonders widerstandsfähigen und stabilen Material, beispielsweise aus glasfaserverstärktem Polyamid, bestehen. Die jeweilige Oberflächenschicht 10, 12 kann aus einen Material mit verringerter Reibung gegenüber dem Material der Feder 3 (zum Beispiel Federstahl), beispielsweise einer Kunststoffmischung umfassend Polyamid und Zusätzen von Polytetrafluorethylen, bestehen.

Die axiale Nut 6 hat in dieser Ausführungsform eine periodisch schwankende Tiefe, beispielsweise mit einem sinusförmigen Profil.

### BEZUGSZEICHENLISTE

- 1: Kolbenzylindereinheit
- 2: Zylinder
- 3: Feder
- 4: Außenfederhülse
- 5: Innenfederhülse
- 6: Nut
- 7: Nut-Maximum
- 8: Nut-Minimum
- 9: Hülsenbasisschicht
- 10: Hülsenoberflächenschicht
- 11: Zylinderbasisschicht
- 12: Zylinderoberflächenschicht

## Patentansprüche

1. Kolbenzylindereinheit (1), umfassend:
- einen Zylinder (2),
- eine konzentrisch um den Zylinder (2) angeordnete Feder (3),
- je eine konzentrisch um die Feder (2) angeordnete Innenfederhülse (5) und Außenfederhülse (4),
wobei der Zylinder (2) und die Feder (3) innerhalb der Innenfederhülse (5) und der Außenfederhülse (4) angeordnet sind, und
- die Innenfederhülse (5) und / oder
- die Außenfederhülse (4) und / oder
- der Zylinder (2)
an einer der Feder zugewandten Oberfläche eine Anzahl von Nuten (6) aufweist, wobei eine Längsachse der Nuten (6) in einer Axialrichtung parallel zu einem Hubweg der Kolbenzylindereinheit ausgerichtet ist,
**dadurch gekennzeichnet, dass**
eine Tiefe der Nuten (6) in Axialrichtung variiert.

2. Kolbenzylindereinheit (1) nach Anspruch 1,
**dadurch gekennzeichnet, dass**
mindestens eine Oberfläche
- der Innenfederhülse (5) und / oder
- der Außenfederhülse (4) und / oder
- des Zylinders (2)
gegenüber dem Material der Feder (3) reiboptimiert ist durch die Materialwahl einer Zylinderoberflächenschicht (12) des Zylinders (2) und / oder einer Hülsenoberflächenschicht (10) der Innenfederhülse (5) und / oder einer Hülsenoberflächenschicht (10) der Außenfederhülse (4).

3. Kolbenzylindereinheit (1) nach Anspruch 1 oder 2,
**dadurch gekennzeichnet, dass**
die Innenfederhülse (4) und/oder Außenfederhülse (5) aus einer Kunststoffmischung umfassend einen Kunststoff, bevorzugt Polyamid, und bevorzugt Zusätze
- von Polytetrafluorethylen, wobei vorzugsweise der Anteil von Polytetrafluorethylen in einem Bereich von 10 % bis 30 % liegt,
oder
- von bevorzugt mit Kohlefasern, Glasfasern und/oder Plastikfasern faserverstärktem Polyamid,
besteht.

4. Kolbenzylindereinheit (1) nach einem der Ansprüche 1 bis 3,
**dadurch gekennzeichnet, dass**
die Innenfederhülse (4) und/oder Außenfederhülse (5) eine zylindrische Hülsenbasisschicht (9) sowie eine Hülsenoberflächenschicht (10) umfasst, wobei die Nuten (6) in der Hülsenoberflächenschicht (10) angeordnet sind, und wobei die Hülsenbasisschicht (9) und die Hülsenoberflächenschicht (10) aus verschiedenen Materialien bestehen

5. Kolbenzylindereinheit (1) nach einem der Ansprüche 1 bis 4,
**dadurch gekennzeichnet, dass**
der Zylinder (2) eine zylindrische Zylinderbasisschicht (11) sowie eine Zylinderoberflächenschicht (12) umfasst, wobei die Nuten (6) in der Zylinderoberflächenschicht (12) angeordnet sind, und wobei die Zylinderbasisschicht (11) und die Zylinderoberflächenschicht (12) aus verschiedenen Materialien bestehen.

6. Verfahren zur Herstellung einer Kolbenzylindereinheit (1), umfassend:
- einen Zylinder (2),
- eine konzentrisch um den Zylinder (2) angeordnete Feder (3),
- je eine konzentrisch um die Feder (3) angeordnete Innenfederhülse (5) und Außenfederhülse (4),
**umfassend folgende Schritte:**
Einbringen von einer Anzahl von Nuten (6) in:
- die Innenfederhülse (5) und / oder
- die Außenfederhülse (4) und / oder
- den Zylinder (2)
an einer der Feder (3) zugewandten Oberfläche, vorzugsweise durch Spritzguss, ein additives Verfahren oder ein subtraktives Verfahren,
wobei die Nuten (6) mit einer in einer Axialrichtung parallel zu einem Hubweg der Kolbenzylindereinheit ausgerichteten Längsachse eingebracht werden,
**dadurch gekennzeichnet, dass**
die Nuten (6) mit einer in Axialrichtung variierenden Tiefe eingebracht werden.

7. Verfahren nach Anspruch 6,
**gekennzeichnet durch folgenden Schritt:**
Erzeugen der Innenfederhülse (5) und oder / der Außenfederhülse (4) durch Beschichten einer zylindrischen Hülsenbasisschicht (9) mit einer Hülsenoberflächenschicht (10), wobei die Nuten (6) in die Hülsenoberflächenschicht (10) eingebracht werden.

8. Verfahren nach einem der Ansprüche 6 bis 7,
**gekennzeichnet durch folgenden Schritt:**
Erzeugen des Zylinders (2) durch Beschichten einer zylindrischen Zylinderbasisschicht (11) mit einer Zylinderoberflächenschicht (12), wobei die Nuten (6) in die Zylinderoberflächenschicht (12) eingebracht werden.

## Claims

1. Piston cylinder unit (1), comprising:
- a cylinder (2),
- a spring (3) arranged concentrically around the cylinder (2),
- an inner spring sleeve (5) and an outer spring sleeve (4) each arranged concentrically around the spring (3),
wherein the cylinder (2) and the spring (3) are arranged inside the inner spring sleeve (5) and the outer spring sleeve (4), and
- the inner spring sleeve (5) and / or
- the outer spring sleeve (4) and / or
- the cylinder (2)
has a number of grooves (6) on the surface facing the spring, wherein a longitudinal axis of the grooves (6) is oriented in an axial direction parallel to a stroke path of the piston cylinder unit,
**characterized in that**
the depth of the grooves (6) varies along the axial direction.

2. Piston cylinder unit (1) according to claim 1,
**characterized in that**
at least one surface
- of the inner spring sleeve (5) and / or
- the outer spring sleeve (4) and / or
- the cylinder (2)
is friction-optimized with respect to the material of the spring (3) by the material choice of a cylinder surface layer (12) of the cylinder (2) and / or of a sleeve surface layer (11) of the inner spring sleeve (5) and / or of a sleeve surface layer (11) of the outer spring sleeve (4).

3. Piston cylinder unit (1) according to claim 1 or 2,
**characterized in that**
the inner spring sleeve (4) and/or outer spring sleeve (5) consists of a synthetic blend comprising a plastic, preferably polyamide, and preferably additions
- of polytetrafluoroethylene, wherein preferably the proportion of polytetrafluoroethylene lies in a range of 10% to 30%,
or
- of fiber-reinforced polyamide. preferably reinforced with carbon fibers, glass fibers and/or plastic fibers.

4. Piston cylinder unit (1) according to one of claims 1 to 3,
**characterized in that**
the inner spring sleeve (4) and/or the outer spring sleeve (5) comprises a cylindrical sleeve base layer (9) and a sleeve surface layer (10), wherein the grooves (6) are arranged in the sleeve surface layer (10), and wherein the sleeve base layer (9) and the sleeve surface layer (10) consist of different materials.

5. Piston cylinder unit (1) according to one of claims 1 to 4,
**characterized in that**
the cylinder (2) comprises a cylindrical cylinder base layer (11) and a cylinder surface layer (12), wherein the grooves (6) are arranged in the cylinder surface layer (12), and wherein the cylinder base layer (11) and the cylinder surface layer (12) consist of different materials.

6. Method of manufacturing a piston cylinder unit (1), comprising:
- a cylinder (2),
- a spring (3) arranged concentrically around the cylinder (2),
- an inner spring sleeve (5) and an outer spring sleeve (4) each arranged concentrically around the spring (3),
the method comprising by the following steps:
introduction of a number of grooves (6) into:
- the inner spring sleeve (5) and / or
- the outer spring sleeve (4) and / or
- the cylinder (2)
on a surface facing the spring (3), preferably by injection molding, an additive method, or a subtractive method,
wherein the grooves (6) are introduced with a longitudinal axis oriented in an axial direction parallel to a stroke path of the piston cylinder unit,
**characterized in that**
the grooves (6) are introduced with a depth varying along the axial direction.

7. Method according to claim 6,
**characterized by** the following step:
production of the inner spring sleeve (5) and/or the outer spring sleeve (4) by coating a cylindrical sleeve base layer (9) with a sleeve surface layer (10), wherein the grooves (6) are introduced into the sleeve surface layer (10).

8. Method according to claim 6 or 7,
**characterized by** the following step:
production of the cylinder (2) by coating a cylindrical cylinder base layer (11) with a cylinder surface layer (12), wherein the grooves (6) are introduced into the cylinder surface layer (12).

## Revendications

1. Unité piston-cylindre (1), comprenant :
- un cylindre (2),
- un ressort (3) disposé concentriquement autour du cylindre (2),
- une douille à ressort intérieure (5) et une douille à ressort extérieure (4) disposées concentriquement autour du ressort (2),
le cylindre (2) et le ressort (3) étant disposés à l'intérieur de la douille à ressort intérieur (5) et de la douille à ressort extérieur (4), et
- la douille à ressort intérieure (5) et/ou
- la douille à ressort extérieure (4) et/ou
- le cylindre (2)
ayant un certain nombre de rainures (6) sur une surface faisant face au ressort, un axe longitudinal des rainures (6) étant aligné dans une direction axiale parallèle à une trajectoire de course de l'unité piston-cylindre,
**caractérisé en ce qu'**
une profondeur des rainures (6) varie dans la direction axiale.

2. Unité piston-cylindre (1) selon la revendication 1,
**caractérisé en ce que**
au moins une surface
- de la douille à ressort intérieure (5) et/ou
- de la douille à ressort extérieure (4) et/ou
- du cylindre (2)
est optimisé par rapport au frottement envers le matériau du ressort (3) par le choix du matériau d'une couche de surface de cylindre (12) du cylindre (2) et/ou d'une couche de surface de douille (10) de la douille à ressort intérieure (5) et/ou d'une couche de surface de douille (10) de la douille à ressort externe (4).

3. Unité piston-cylindre (1) selon la revendication 1 ou 2,
**caractérisé en ce que**
la douille à ressort intérieure (5) et/ou la douille à ressort extérieure (4) est faite d'un mélange plastique comprenant un plastique, de préférence du polyamide, et de préférence des additifs
- de polytétrafluoroéthylène, la proportion de polytétrafluoroéthylène étant de préférence comprise entre 10% et 30%, ou
- de polyamide renforcé, de préférence renforcé de fibres de carbone, de verre et/ou de plastique.

4. Unité piston-cylindre (1) selon une des revendications 1 à 3,
**caractérisé en ce que**
la douille à ressort intérieure (5) et/ou la douille à ressort extérieure (4) comprend une couche de base de douille (9) cylindrique et une couche de surface de douille (10), les rainures (6) étant agencées dans la couche de surface de douille (10), et la couche de base de douille (9) et la couche de surface de douille (10) étant constituée de différents matériaux

5. Unité piston-cylindre (1) selon une des revendications 1 à 4,
**caractérisé en ce que**
le cylindre (2) comprend une couche de base de cylindre (11) cylindrique et une couche de surface de cylindre (12), les rainures (6) étant agencées dans la couche de surface de cylindre (12), et la couche de base de cylindre (11) et la couche de surface de cylindre (12) étant constituée de différents matériaux.

6. Procédé de fabrication d'une unité piston-cylindre (1), comprenant :
- un cylindre (2),
- un ressort (3) disposé concentriquement autour du cylindre (2),
- une douille à ressort intérieure (5) et une douille à ressort extérieure (4) disposées concentriquement autour du ressort (3),
le procédé comprenant les étapes suivantes :
Faire un certain nombre de rainures (6) dans :
- la douille à ressort intérieure (5) et/ou
- la douille à ressort extérieure (4) et/ou
- le cylindre (2)
sur une surface faisant face au ressort (3), de préférence par moulage par injection, par un processus additif ou par un processus soustractif,
les rainures (6) étant introduites avec un axe longitudinal aligné dans une direction axiale parallèle à une trajectoire de course de l'unité piston-cylindre, **caractérisé en ce que**
les rainures (6) sont faites avec une profondeur variable dans la direction axiale.

7. Procédé selon la revendication 6 :
**caractérisé par** l'étape suivante :
Fabriquer la douille à ressort intérieure (5) et/ou de la douille à ressort extérieure (4) par revêtement d'une couche de base de douille (9) cylindrique avec une couche de surface de douille (10), les rainures (6) étant faites dans la couche de surface de douille (10).

8. Procédé selon une des revendications 6 à 7 :
**caractérisé par** l'étape suivante :
Fabriquer le cylindre (2) par revêtement d'une couche de base de cylindre (11) cylindrique avec une couche de surface de cylindre (12), les rainures (6) étant faites dans la couche de surface de cylindre (12).
